# EUROPEAN PATENT APPLICATION

(11) **EP 3 136 369 A1**
(43) Date of publication of application: **01.03.2017**
(21) Application number: 15783014.2
(22) Date of filing: 15.04.2015
(51) Int. Cl.: G08G 1/16, B60R 21/00

(54) **VEHICLE DISPLAY SYSTEM**

(30) Priority: 25.04.2014 JP 2014091486
(71) Applicant: Nippon Seiki Co., Ltd., Nagaoka-shi, Niigata 940-8580 (JP)
(72) Inventor: HOMMA,Azumi, Nagaoka, Niigata (JP)
(74) Representative: Carpmaels & Ransford LLP
(86) International application number: PCT/JP2015/061548
(87) International publication number: WO 2015/163205

(57) **Abstract**

The purpose of the present invention is to contribute to safe vehicle operation by suppressing the movement of a user's line-of-sight and causing the degree of a potential risk to be intuitively presented and recognized. A vehicle display system (100) comprises: a periphery recognition unit (300) that detects the position, type, and the like of a specified object (W) on a road surface; a display unit (200) that displays a wall surface image (V) which is superimposed onto the actual scenery outside of a user's vehicle (1) so as to be visible to a user (2); and a control unit (600) that controls the display unit (200). The control unit (600) displays, with the specified object (W) as the point of origin, a lateral wall image (V1) having a wall surface section that protrudes upward.

## Description

### TECHNICAL FIELD

The present invention relates to a vehicle display system that presents a display to a user to assist vehicle operation.

### BACKGROUND ART

There is a known a vehicle display system using a head-up display device (vehicle display device). The vehicle display system contributes to safe and comfortable vehicle operation by displaying a superimposed image on scenery (actual scenery) in front of one's own vehicle to generate augmented reality (AR), in which information is added to and emphasized on actual scenery, and providing desired information appropriately while suppressing a movement of line-of-sight of a user driving a vehicle.

Information displayed by the vehicle display device includes a risk potential that notifies a user (usually, a vehicle driver) of a degree of a potential risk related to a vehicle operation. Patent Literature 1 describes a device that displays such a risk potential by a superimposed image.

The vehicle display device described in the patent literature 1 acquires information about a road in front of one's own vehicle, determines a risk potential notifying a user of the degree of a potential risk based on the road information, and changes a display color of a superimposed image to be displayed in a lane area depending on the degree of a risk potential. The device calls the user's attention, for example by displaying a superimposed image that fills red in an opposite lane area or an area in front of a stop line in a driving lane of the own vehicle.

### CITATION LIST

### PATENT LITERATURE

Patent Literature 1: JP-A-2005-202787

### SUMMARY OF THE INVENTION

### PROBLEMS TO BE SOLVED BY THE INVENTION

However, in the vehicle display device described in the patent literature 1, the degree of a risk potential is indicated by a superimposed image that fills the lane. This has a problem that it is difficult to recognize intuitively where a risk factor exists in the filled area and what operation must not be done.

Further, the vehicle display device described in the patent literature 1 displays the superimposed image over the lane, and the user must lower the line-of-sight than that in the ordinary vehicle operation when recognizing the superimposed image. This leaves room for improvement from the viewpoint of reducing the movement of the user's line-of-sight.

Accordingly, it is an object of the present invention to contribute to safe vehicle operation by suppressing the movement of a user's line-of-sight and enabling the user to intuitively sense and recognize the degree of a potential risk.

### MEANS FOR SOLVING THE PROBLEM

To achieve the above object, there is provided a vehicle display system including a periphery recognition unit for detecting a specified object on a road, a display unit for displaying a superimposed image that is superimposed on an actual scenery outside an own vehicle to be visible to a viewer, and a control unit for controlling the display unit, wherein the control unit displays a wall surface image having a wall surface section protruding from the specified object as a starting point.

### EFFECT OF THE INVENTION

According to the present invention, it is possible to contribute to safe vehicle operation by suppressing the movement of a user's line-of-sight and enabling the user to intuitively sense and recognize the degree of a potential risk.

### BRIEF DESCRIPTION OF THE DRAWINGS

Fig. 1 is a diagram explaining a configuration of a vehicle display system in a first embodiment of the present invention.
Fig. 2 shows diagrams explaining a sidewall image to be recognized by a user of a vehicle in the above embodiment.
Fig. 3 is a table showing data for determining a risk potential in the above embodiment.
Fig. 4 is a photo for explaining a display example of a front wall image in the above embodiment.
Fig. 5 is a photo for explaining a display example of a front wall image in the above embodiment.
Fig. 6 is a diagram showing a modification of a wall surface image (sidewall image).

### MODE FOR CARRYING OUT THE INVENTION

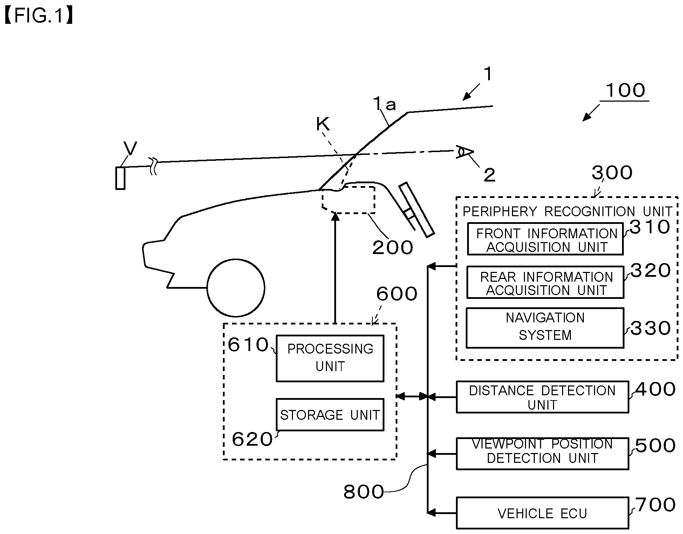

An embodiment of a vehicle display system 100 according to the present invention will be described with reference to Fig. 1.

The vehicle display system 100 is configured to be mounted on an own vehicle 1. The system includes a display unit 200 that displays a superimposed image V to be overlaid on an actual scenery outside the own vehicle 1 to be visible to a user 2 of the own vehicle 1; a periphery recognition unit 300 that recognizes peripheral states of the own vehicle 1; a distance detection unit 400 that detects a distance from the own vehicle 1 to a specified object W (e.g., a lane marking line W1, a stop line W2 on a road, and a vehicle in front); a viewpoint position detection unit 500 that detects a viewpoint position of the user 2; and a control unit 600 that inputs information from the periphery recognition unit 300, the distance detection unit 400, and the viewpoint position detection unit 500, and controls the display unit 200.

The display unit 200 is a head-up display unit, which projects a display light K to a windshield 1a of the own vehicle 1 to enable a user 2 to recognize a virtual superimposed image V together with an actual scenery through the windshield 1a. By adjusting a position of the display light K projected to the windshield 1a, under the control of the control unit 600 described later, it is possible to display the superimposed image V to be superimposed on the specified object W on the actual scenery in front of the own vehicle 1. Further, being connected to a navigation system 330 or a vehicle ECU 700 described later, the display unit 200 can display a vehicle information image such as a vehicle speed and a route guide image including an arrow image for guiding a route, in addition to the superimposed image V to be superimposed on the specified object W of an actual scenery.

The periphery recognition unit 300 is configured to monitor peripheral states of the own vehicle 1. In this embodiment, the periphery recognition unit 300 includes a front information acquisition unit 310 for recognizing states in front the own vehicle 1 by imaging the front of the own vehicle 1; a rear information acquisition unit 320 for recognizing front and side states of the own vehicle 1 by imaging the front and side of the own vehicle 1; and a navigation system 330 capable of recognizing the peripheral environment of the own vehicle 1 based on the position of the own vehicle 1 and the information from a database.

The front information acquisition unit 310 is configured to image the front area including a road surface where the own vehicle 1 is traveling, and is composed of a stereo camera or the like. The front information acquisition unit 310 is able to analyze a specified object W related to a road (lane, lane marking line W1, stop line W2, crosswalk, road width, number of lanes, intersection, curve, branch road W3, and the like) or a specified object W on a road (vehicle in front or obstacle) by analyzing the captured image data based on a well-known image processing or a pattern matching method using a not-shown image analysis unit. Further, the front information acquisition unit 310 is able to calculate a distance from the own vehicle 1 to the captured specified object W (lane marking line W1, stop line W2, a vehicle in front, and the like). The front information acquisition unit 310 may have a not-shown communication means, and acquire information about the area in front of the own vehicle 1 from a communication infrastructure on a road.

The rear information acquisition unit 320 is a distance measuring sensor for measuring a distance from the own vehicle 1 to a vehicle existing on an area from the rear to the side of the own vehicle, and includes a distance measuring camera, a radar sensor, or the like. The rear information acquisition unit 320 is able to individually recognize a plurality of rear vehicles approaching the own vehicle 1. The rear information acquisition unit 320 is able to detect continuously or intermittently the distance from the own vehicle 1 to each rear vehicle, and calculate a relative speed of the rear vehicle based on the speed of the own vehicle 1 by comparing the time difference. In other words, the rear information acquisition unit 320 outputs a relative distance and a relative speed of each rear vehicle approaching the own vehicle 1, to the control unit 600 described later. Further, the rear information acquisition unit 320 may have a not-shown communication means, and obtain a relative speed based on the positional relationship and the time difference between the own vehicle 1 and other vehicles via a vehicle-to-vehicle communication or a communication infrastructure on a road.

The navigation system 330 is configured to specify a position of the own vehicle 1 by a not-shown GPS sensor, and outputs information about a road around the own vehicle 1 (kind of lane, width of road, number of lanes, intersection, curve, branch road W3, and the like) to the control unit 600 described later.

The distance detection unit 400 is composed of a near distance detection radar such as a millimeter-wave radar, a sonar using ultrasonic waves and the like, and an imaging camera such as a visible light camera and an infrared camera, and the likes. The distance detection unit 400 outputs the acquired data to the control unit 600 described later. The control unit 600 is able to calculate a distance or a relative speed to/with a specified object W based on the data inputted from the distance detection unit 400.

The viewpoint position detection unit 500 is configured to detect a viewpoint position of the user 2 (a line-of-sight position in vertical and lateral directions), and is composed of an infrared camera to capture the user 2, or the like. The viewpoint position detection unit 500 is configured to image the eyes of the user 2. The viewpoint position detection unit 500 is able to analyze a viewpoint position of the user 2 by analyzing the acquired data based on a well-known image processing or a pattern matching method using a not-shown image analysis unit, and output the information about the viewpoint position of the user 2 to the control unit 600. The user 2 may adjust a display position of the superimposed image V to meet the user's viewpoint position by operating a not-shown input means. In such a case, the viewpoint position detection unit 500 may be omitted.

The control unit 600 includes a processing unit 610, which includes one or more microprocessors, a microcontroller, an ASIC, an FPGA, any other IC, and the like, and a storage unit 620, which includes one or more memories capable of storing a program and data, such as a rewritable RAM, a read-only ROM, a non-erasable program read-only EEPROM, and a flash memory or a non-volatile memory. The control unit 600 is connected to the display unit 200, the periphery recognition unit 300, the distance detection unit 400, the viewpoint position detection unit 500, the vehicle ECU 700, and the navigation system 330, to be capable of exchanging a signal with via a bus 800 such as a CAN bus communication (Controller Area Network).

The processing unit 610 calculates a display position of the superimposed image (wall surface image) V, which is to be displayed by the display unit 200, and controls the display unit 200 based on the information about the position of the specified object W inputted from the periphery recognition unit 300 and the information about the viewpoint position of the user 2 inputted from the viewpoint position detection unit 500. Since a display position of the specified object W is set based on the position of the specified object W and the position of the viewpoint position detection unit 500, even when the physique and posture of the user 2 are different, it is possible to display the superimposed image V at a desired position with respect to the specified object W in an actual scenery.

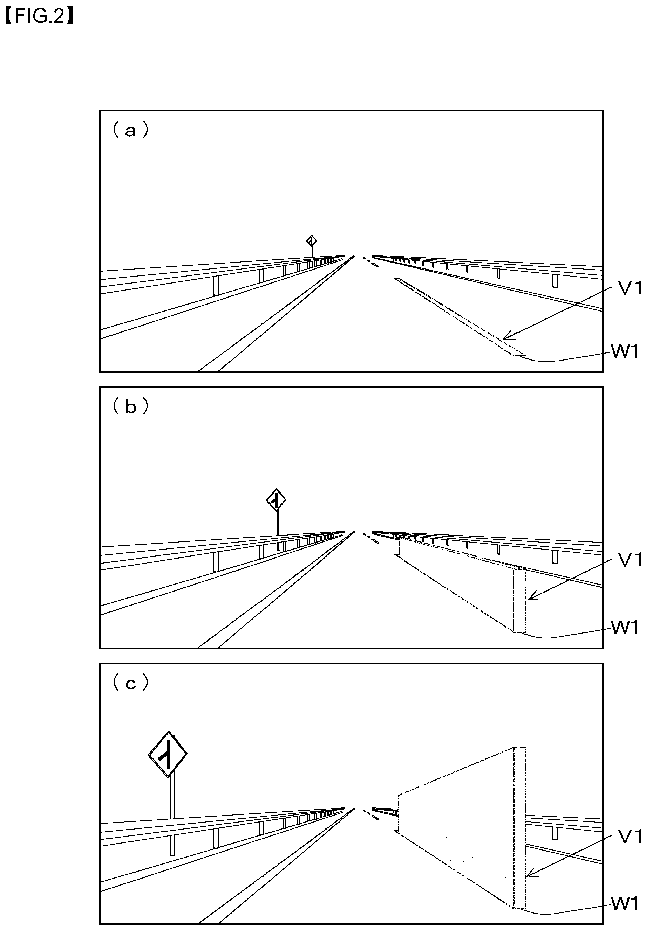

Using Fig. 2, an actual scenery viewed by the user 2 and the sidewall image V1 (wall surface image V) described later will be described. Fig. 2 shows an example of a scenery visible to the user 2 when viewing the front from a driver's seat of the own vehicle 1 through the windshield 1a. It is a display example of the sidewall image V1 informing a risk of changing a lane.

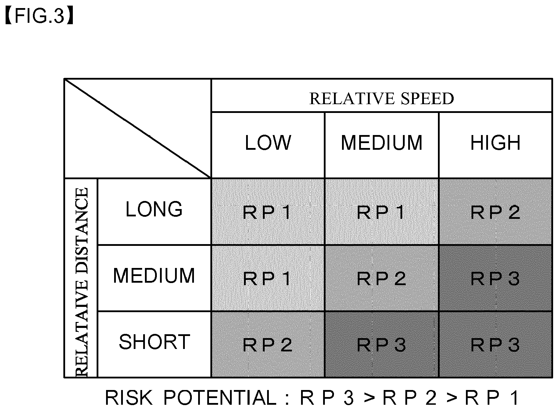

The processing unit 610 detects the approach of a rear vehicle based on the data from the rear information acquisition unit 320, and calculates the risk potential RP of the rear vehicle approaching the own vehicle 1. In particular, the processing unit 610 uses the table data as shown in Fig. 3 for acquiring the risk potential RP based on the relative distance and relative speed of the rear vehicle to the own vehicle 1. The processing unit 610 displays, as shown in Fig. 2 (a), (b) and (c), the sidewall image V1 on the lane marking line W1 between a traveling lane L1 where the own vehicle 1 is traveling and a passing lane L2, and displays the sidewall image V1 with a different height based on the degree of the risk potential RP. The processing unit 610 calculates the risk potential RP in the case where the own vehicle 1 is moved to a position away farther from the own vehicle 1 than the wall surface image V described later, and displays the wall surface image V. This enables the user 2 to avoid the risk by not moving the vehicle beyond the wall surface image V.

The sidewall image V1 is a wall-like image having a planar and/or curved surface rising from the lane marking line W1 on the road as a starting point along a traveling direction of the own vehicle 1. The processing unit 610 displays, as shown in Fig. 2 (a), the planar sidewall image V1 not having a height to be superimposed on the lane marking line W1. When the risk potential RP is determined great (the risk potential RP is RP2, RP3 in Fig. 3), the processing unit 610 displays the sidewall image V1 extending from the lane marking line W1 as a starting point up to the height corresponding to the risk potential RP. As described above, by the display of the planar and/or curved sidewall image V1 (wall surface image V) having the height from the lane marking line W1 (specified object W) on the road as a starting point, the user 2 feels the sidewall image Va as a wall, and is intuitively induced not to approach the sidewall image V1 preventing a dangerous operation in the lateral direction such as a lane change.

Further, the height of the sidewall image V1 rising from the lane marking line W1 (specified object W) as a starting point can be changed depending on the risk potential RP, and the user can instantaneously recognize a position and a degree of the risk potential RP.

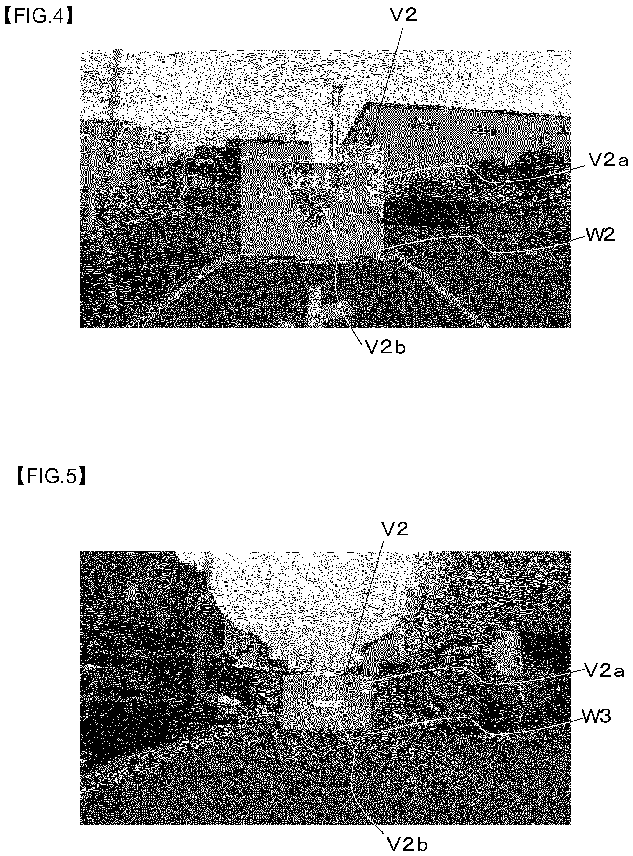

Further, a front wall image V2 will be described using Figs. 4 and 5. Fig. 4 is a photo showing the front wall image V2 superimposed on the stop line W2. Fig. 5 is a photo showing the front wall image V2 superimposed on the branch road W3.

The front wall image V2 has a planar and/or curved surface rising from the specified object W on the road (stop line W2 or branch road W3) as a starting point so as to face the traveling direction of the own vehicle 1. The front wall image V2 includes a wall surface section V2a like a wall that is raised to face the own vehicle 1, and a risk information section V2b that provides the user 2 with information such as characters and graphics displayed on the surface of the wall surface section V2a.

The front wall image V2 in Fig. 4 has a planar wall surface section V2a rising from the stop line W2 on the road as a starting point so as to face the own vehicle 1, and displays the risk information section V2b that is a stop sign on the surface of the wall surface section V2a. The height of the wall surface section V2 varies depending on the risk potential RP calculated by the control unit 600. The processing unit 610 inputs, for example, a speed and a relative distance of the own vehicle 1 to the stop line W2, determines the risk potential RP by using the table data as shown in Fig. 3, and adjusts the height of the wall surface section V2a based on the potential risk RP. When the speed is fast despite the distance is close to the stop line W2, the processing unit 610 determines that the risk potential RP is high, and displays the wall surface section V2a in a higher position. Thus, the user 2 feels like there is a wall in the traveling direction of the own vehicle 1, and is induced to loosen the speed contributing to safe operation.

Further, when the own vehicle 1 stops temporarily at the stop line W2, the processing unit 610 determines that the risk potential RP is lowered, and decreases the height of the wall surface section V2a. Because the wall surface section V2a is displayed with a height as long as the risk potential RP is not sufficiently lowered, the user feels like there is a wall in the traveling direction of the own vehicle 1, and is forced to stop the vehicle to continue operation, and is urged to take an action to lower the risk potential RP to reduce the height of the wall surface section V2a.

The front wall image V2 in Fig. 5 has the planar wall surface section V2a rising from the branch road W3 on the road as a starting point so as to block the lane, and displays the risk information section V2b that is a no-entry sign on the surface of the wall surface section V2a. The height of the wall surface section V2a is displayed by a predetermined height. As the height of the wall surface section V2a is increased to a certain level without depending on the risk potential RP as in this manner, the user 2 can avoid the risk certainly and contribute to safe operation.

Further, when the own vehicle 1 approaches within a predetermined distance to the branch road W3, the processing unit 610 does not change the height of the sidewall image V1a, hides the risk information section V2b, and displays a risk avoidance image (not shown), such as an arrow image indicating a guide route different from the risk information section V2b, on the wall surface section V2a. With such a configuration, it is possible to urge the user 2 to perform the operation avoiding a risk (e.g., entry prohibited branch road W3).

Furthermore, though not shown in the drawings, when the own vehicle 1 stops for a predetermined period of waiting a signal, for example, the processing unit 610 displays an operation image capable of operating an in-vehicle equipment, such as a music playback image and an air-conditioner operating image. When the vehicle is allowed to move, the processing unit 610 determines that the risk potential RP for the movement is lowered, and reduces the display height of the wall surface section V2a displaying the operation image. Therefore, the user 2 can instantaneously recognize the lowered risk potential RP by the reduced height of the operation image accompanying the decrease in the height of the wall surface section V2 even while watching the operation image during the stop, and can immediately resume the operation.

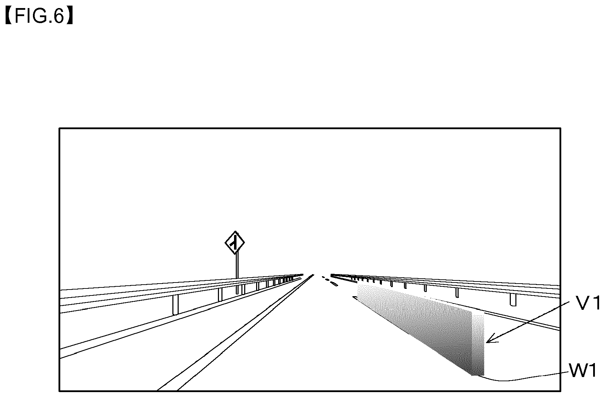

Still further, as a modification, the processing unit 610 may be configured, as shown in Fig. 6, to decrease the upper side visibility of the sidewall image V1 (wall surface image V) to facilitate viewing of an actual scenery. On the contrary, the lower side visibility of the sidewall image V1 (wall surface image V) may be decreased to facilitate viewing of the specified object W. The visibility of the middle part of the sidewall image V1 (wall surface image V) may be decreased to facilitate viewing of an actual scenery at a predetermined height.

The present invention is not to be limited to the embodiments described hereinbefore. It is possible to add appropriate modifications (including deletion of component elements) without departing from its spirit and essential characteristics.

### INDUSTRIAL APPLICABILITY

The vehicle display system of the present invention is applicable, for example, to a vehicle display system using a head-up display that projects an image onto a windshield or the like of a vehicle, and displays a virtual image.

### DESCRIPTION OF REFERENCE NUMERALS

- 1: Own vehicle
- 1a: Windshield
- 2: User
- 100: Vehicle display system
- 200: Display unit
- 300: Periphery recognition unit
- 310: Front information acquisition unit
- 320: Rear information acquisition unit
- 330: Navigation system
- 400: Distance detection unit
- 500: Viewpoint position detection unit
- 600: Control unit
- 610: Processing unit
- 620: Storage unit
- 700: Vehicle ECU
- 800: Bus
- V: Wall surface image
- V1: Sidewall image
- V2: Front wall image
- V2a: Wall surface section
- V2b: Risk information unit
- W: Specified object

## Claims

1. A vehicle display system comprising a periphery recognition unit for detecting a specified object on a road, a display unit for displaying a superimposed image that is superimposed on an actual scenery outside an own vehicle to be visible to a viewer, and a control unit for controlling the display unit,
wherein the control unit displays a wall surface image having a wall surface section protruding from the specified object as a starting point.

2. The vehicle display system according to claim 1, wherein the control unit calculates a risk potential at a position away farther from the own vehicle than the wall surface section, and adjusts the height of the wall surface section depending on the risk potential.

3. The vehicle display system according to claim 2, wherein the control unit displays a risk image that indicates information about the risk potential on the wall surface section.

4. The vehicle display system according to any of claims 1 to 3, wherein the wall surface image includes a sidewall image to be displayed along a lane where the own vehicle travels, and/or a front wall image to be displayed to block the lane.

5. The vehicle display system according to any of claims 1 to 4, wherein the wall surface image is formed by changing visibility along a height direction.

6. The vehicle display system according to any of claims 1 to 5, wherein the periphery recognition unit includes a lane marking line, a stop line, a branch road, or a vehicle in front as the specified object to be detected.

7. The vehicle display system according to any of claims 1 to 6, wherein the control unit is configured to display an image different from the risk image on the wall surface section.
